# EUROPÄISCHE PATENTANMELDUNG

(11) **EP 4 099 043 A1**
(43) Veröffentlichungstag der Anmeldung: **07.12.2022**
(21) Anmeldenummer: 21176824.7
(22) Anmeldetag: 31.05.2021
(51) Int. Cl.: G01S 5/02

(54) **VERFAHREN ZUR LOKALISIERUNG EINES TRANSPONDERS FÜR EIN FUNKORTUNGSSYSTEM, FUNKORTUNGSSYSTEM UND BASISSTATION**

(71) Anmelder: Siemens Aktiengesellschaft, 80333 München (DE)
(72) Erfinder: Michel, Georg, 09116 Chemnitz (DE)

(57) **Zusammenfassung**

Zur Lokalisierung eines Transponders wird eine Position eines Transponders (104) mittels mehrerer Basisstationen (101-103) des Funkortungssystems anhand von Funksignal-Laufzeiten ermittelt. Eine Master-Basisstation (101) sendet eine erste kryptgraphisch gesicherte Information an den Transponder. Der Transponder antwortet bei korrektem Empfang der ersten kryptographisch gesicherten Information innerhalb einer vorgegebenen Zeitdauer ab Empfang mit einer zweiten kryptographisch gesicherten Information an die Basisstationen. Die Master-Basisstation berechnet die Position des Transponders anhand ermittelter Signallaufzeiten als Schnittpunkt eines Kreises (11) um die Master-Basisstation mit Ellipsen (12-13) um Slave-Basisstationen (102-103).

## Beschreibung

Die vorliegende Erfindung betrifft ein Verfahren zur Lokalisierung eines Transponders für ein Funkortungssystem, insbesondere für ein Real-time Locating System (RTLS), ein Funkortungssystem zur Durchführung des Verfahrens und eine Basisstation für ein solches Funkortungssystem.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

EP 3 599 573 B1 betrifft ein Verfahren zur Datenübermittlung zwischen einem Funk-Transponder-Lesegerät und einem Funk-Transponder, bei dem eine Steuerungseinheit des Funk-Transponders zur Erzeugung eines Antwortsignals eine Veränderung einer Lastimpedanz durch ein Steuerungssignal steuert, das eine ausgewählte Schaltimpulsfrequenz und eine ausgewählte Schaltimpulsanzahl aufweist. Die Steuerungseinheit codiert mehrwertige zumindest ternäre Symbole in das Steuerungssignal. Symbolwerte werden jeweils zu Schaltimpulsfolgen zugeordnet, die jeweils eine eindeutige Kombination aus Schaltimpulsfrequenz, Schaltimpulszahl und Phasenverschiebung aufweisen. Dabei werden nur Kombinationen ausgewählt, deren Quotient aus Schaltimpulszahl und Schaltimpulsfrequenz innerhalb eines vorgegebenen Wertbereichs liegt.

Aus der älteren europäischen Patentanmeldung mit dem Anmeldeaktenzeichen 20183193.0 ist ein Funkortungssystem bekannt, bei dem eine Position eines Transponders mittels mehrerer Basisstationen des Funkortungssystems anhand von Funksignal-Empfangszeitdifferenzen in einem ersten Betriebsmodus oder anhand von Funksignal-Laufzeiten in einem zweiten Betriebsmodus ermittelt wird. Zur Ermittlung seiner Position sendet der Transponder per Broadcast eine Nachricht an die Basisstationen. Die Nachricht empfangende Basisstationen ermitteln jeweils eine Empfangssignalstärke eines zur Übermittlung der Nachricht verwendeten Transpondersignals. Eine Auswertevorrichtung ermittelt eine Anzahl der Basisstationen, die das Transpondersignal mit einer über einer vorgegebenen Mindestsignalstärke liegenden Empfangssignalstärke empfangen haben und versetzt die Basisstationen dementsprechend in den ersten oder in den zweiten Betriebsmodus.

In der älteren europäischen Patentanmeldung mit dem Anmeldeaktenzeichen 20204943.3 ein Funkortungssystem beschrieben, bei dem eine Position zumindest eines Transponders mittels mehrerer Basisstationen des Funkortungssystems ermittelt wird. Dabei sind die Basisstationen jeweils an einer vorgegebenen Position angeordnet. Zumindest zwei einen Abstand zueinander aufweisende Transponder-Antennen senden in vorgegebenen Zeitabständen abwechselnd Funksignale. Die Basisstationen ermitteln auf Basis der von den beiden Transponder-Antennen gesendeten Funksignale und anhand des Abstands zwischen den beiden Transponder-Antennen jeweils Funksignal-Empfangszeitdifferenzen zwischen den von den Transponder-Antennen empfangenen Funksignalen. Die Position des zumindest einen Transponders wird anhand der Funksignal-Empfangszeitdifferenzen ermittelt.

Zur funkbasierten und fälschungssicheren Lokalisierung von Gegenständen bzw. Personen können beispielsweise Krypto-RFID-Tags oder Secure Distance Bounding Protokolle verwendet werden. Mittels Krypto-RFID-Tags kann eine Authentizität eines RFID-Transponders durch ein RFID-Lesegerät nachgewiesen werden. Nachteilig ist, dass Weiterleitungsangriffe bei Verwendung von Krypto-RFID-Tags möglich sind und eine eine physische Nähe zwischen dem RFID-Transponder und dem RFID-Lesegerät nicht bewiesen kann. Secure Distance Bounding Protokolle finden insbesondere in neueren Autoschlüsseln mit UWB-Funkmodul Verwendung. Details hierzu sind www.3db-access.com zu entnehmen. Durch Anwendung von Secure Distance Bounding Protokollen wird einerseits eine Authentizität eines Schlüssels und andererseits eine physische Nähe des Schlüssels zu einem zugeordneten Lesegerät bzw. Funkempfänger sichergestellt. Insbesondere Weiterleitungsangriffe werden durch Anwendung von Secure Distance Bounding Protokollen unmöglich gemacht. Bestehende Secure Distance Bounding-basierte Lösungen ermöglichen jedoch keine besonders genaue Ortung einer größeren Anzahl von Transpondern.

Der vorliegenden Erfindung liegt daher die Aufgabe zugrunde, ein Verfahren zur Lokalisierung eines Transponders für ein Funkortungssystem zu schaffen, das eine sichere und genaue Ortung einer Vielzahl von Transpondern ermöglicht, sowie zur Durchführung des Verfahrens geeignete Mittel bzw. Realisierungen anzugeben.

Diese Aufgabe wird erfindungsgemäß durch ein Verfahren mit den in Anspruch 1 angegebenen Merkmalen, durch ein Funkortungssystem mit den in Anspruch 9 angegebenen Merkmalen und durch eine Basisstation mit den in Anspruch 10 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zum Betrieb eines Funkortungssystems

Entsprechend dem erfindungsgemäßen Verfahren zur Lokalisierung eines Transponders für ein Funkortungssystem wird eine Position eines Transponders mittels mehrerer Basisstationen des Funkortungssystems anhand von Funksignal-Laufzeiten ermittelt wird, insbesondere mittels eines Two-Way Ranging Verfahrens. Dabei sind die Basisstationen jeweils an einer vorgegebenen Position angeordnet. Das Funkortungssystem ist insbesondere zumindest ein UWB-basiertes Real-time Locating System.

Eine Master-Basisstation sendet erfindungsgemäß ein Zeitsynchronisationssignal an zumindest zwei Slave-Basisstationen. Vorteilhafterweise umfassen die Basisstationen und der Transponder jeweils einen lokalen Oszillator. Dabei wird zwischen der Master-Basisstation und dem Transponder eine Korrektur einer Frequenzabweichung ihrer lokalen Oszillatoren entsprechend einem Distance Bounding Protokoll durchgeführt. Anhand der Korrektur der Frequenzabweichung des lokalen Oszillators der Master-Basisstation führen die Slave-Basisstationen vorteilhafterweise jeweils eine entsprechende Korrektur für ihren jeweiligen lokalen Oszillator und damit für eine erhöhte Lokalisierungsgenauigkeit durch.

Darüber hinaus sendet die Master-Basisstation erfindungsgemäß eine erste kryptgraphisch gesicherte Information an den Transponder. Der Transponder antwortet bei korrektem Empfang der ersten kryptographisch gesicherten Information innerhalb einer vorgegebenen Zeitdauer ab Empfang mit einer zweiten kryptographisch gesicherten Information an die Basisstationen. Bei korrektem Empfang der zweiten kryptographisch gesicherten Information ermitteln die Basisstationen jeweils eine Signallaufzeit, die eine Differenz zwischen einem Sendezeitpunkt der ersten kryptographisch gesicherten Information und einem jeweiligen Empfangszeitpunkt der zweiten kryptographisch gesicherten Information abzüglich der vorgegebenen Zeitdauer umfasst. Ein korrekter Empfang der ersten bzw. der zweiten kryptgraphisch gesicherten Information umfasst insbesondere ein erfolgreiches Entschlüsseln bzw. Vergleichen mit einer Referenz-Information. Vorzugsweise werden die erste und die zweite kryptgraphisch gesicherte Information während eines Initialisierungsvorgangs in den Basisstationen gegen unautorisierten Zugriff gesichert gespeichert.

Anhand der ermittelten Signallaufzeiten berechnet die Master-Basisstation die Position des Transponders erfindungsgemäß als Schnittpunkt eines Kreises um die Master-Basisstation mit Ellipsen um die Slave-Basisstationen. Für den Schnittpunkt des Kreises um die Master-Basisstation mit den Ellipsen um die Slave-Basisstationen kann vorteilhafterweise ein Toleranzbereich vorgegeben werden, innerhalb dessen sich die Kurve und die Ellipsen zumindest annähern müssen. In diesem Fall wird bei einer Überschreitung des Toleranzbereichs ein Fehler oder Manipulationsversuch signalisiert.

Durch das erfindungsgemäße Verfahren können Distanzreduktionsangriffe, wie Early-Detect Late-Commit oder Cicada Attacks verhindert werden, die quasi funktechnische Man-in-the-Middle-Angriffe darstellen, bei denen sich Angreifer als in eine Funkverbindung zwischen dem Transponder und den Basisstationen schalten bzw. eine gemessene Distanz durch ein Störsignal künstlich verringern. Auf diese Weise wird eine fälschungssichere Lokalisierung bei genauer räumlicher Auflösung sichergestellt. Durch eine kryptografische Sicherung der Lokalisierung werden vorteilhafterweise neue Anwendungsgebiete ermöglicht, wie sichere passive Zugangssysteme, ohne dass notwendigerweise an jeder zu überwachenden Tür ein Transponderlesegerät bzw. eine Basisstation installiert sein muss. Grundsätzlich können auf Basis der vorliegenden Erfindung auch automatisierte Zahlungen realisiert werden, wenn zu bezahlende Gegenstände an vorgegebenen Lager- oder Stellplätzen aufbewahrt bzw. von dort entnommen werden. Darüber hinaus wird durch die vorliegende Erfindung auch eine Speicherung eines digital signierten Positionsverlaufs in einem Transponder ermöglicht.

Die Basisstationen umfassen insbesondere jeweils zumindest eine Antenne. Vorzugsweise schalten die Slave-Basisstationen, während die Master-Basisstation die erste kryptgraphisch gesicherte Information an den Transponder sendet, zeitgleich ihre Antennen ab und schalten diese erst nach vollständigem Senden der ersten kryptgraphisch gesicherten Information wieder zu. Auf diese Weise wird ein interferenzfreier Empfang der ersten kryptographisch gesicherten Information durch den Transponder sichergestellt. Dies gilt insbesondere, wenn die Slave-Basisstationen jeweils eine erste kryptgraphisch gesicherte Information an den Transponder senden, die mit der durch die Master-Basisstation gesendeten ersten kryptgraphisch gesicherten Information identisch ist. In diesem Fall unterbinden die Slave-Basisstationen vorteilhafterweise jeweils während eines Sendens der ersten kryptgraphisch gesicherten Information durch die Master-Basisstation ein zeitgleiches Senden ihrer ersten kryptographisch gesicherten Information und schalten erst nach dem vollständigen Senden der ersten kryptgraphisch gesicherten Information durch die Master-Basisstation wieder auf Empfang.

Entsprechend einer bevorzugten Ausgestaltung der vorliegenden Erfindung wird die zweite kryptographisch gesicherte Information nur einmal identisch an die Basisstationen gesendet. Für nachfolgende Lokalisierungsvorgänge wird die zweite kryptographisch gesicherte Information entsprechend einer nur den Basisstationen bekannten Codesequenz fortlaufend modifiziert. Auf diese Weise wird eine fortlaufende sichere Lokalisierung des Transponders ermöglicht.

Das erfindungsmäße Funkortungssystem ist zur Durchführung eines Verfahrens entsprechend vorangehenden Ausführungen vorgesehen und umfasst mehrere jeweils an einer vorgegebenen Position angeordnete Basisstationen zur Ermittlung einer Position zumindest eines Transponders sowie zumindest einen Transponder. Die die Basisstationen sind dafür ausgestaltet, eine Position des Transponders anhand von Funksignal-Laufzeiten zu ermitteln und als Master-Basisstation oder als Slave-Basisstation betrieben zu werden. Außerdem sind die Basisstationen zusätzlich dafür ausgestaltet, als Master-Basisstation ein Zeitsynchronisationssignal an zumindest zwei Slave-Basisstationen zu senden und eine erste kryptgraphisch gesicherte Information an den Transponder zu senden. Der Transponder ist dafür ausgestaltet, bei korrektem Empfang der ersten kryptographisch gesicherten Information innerhalb einer vorgegebenen Zeitdauer ab Empfang mit einer zweiten kryptographisch gesicherten Information an die Basisstationen zu antworten.

Die Basisstationen des erfindungsgemäßen Funkortungssystems sind ferner dafür ausgestaltet, bei korrektem Empfang der zweiten kryptographisch gesicherten Information jeweils eine Signallaufzeit zu ermitteln, die eine Differenz zwischen einem Sendezeitpunkt der ersten kryptographisch gesicherten Information und einem jeweiligen Empfangszeitpunkt der zweiten kryptographisch gesicherten Information abzüglich der vorgegebenen Zeitdauer umfasst. Zusätzlich sind die Basisstationen dafür ausgestaltet, als Master-Basisstation die Position des Transponders anhand der ermittelten Signallaufzeiten als Schnittpunkt eines Kreises um die Master-Basisstation mit Ellipsen um die Slave-Basisstationen zu berechnen.

Die erfindungsgemäße Basisstation ist für ein Funkortungssystem entsprechend vorangehenden Ausführungen vorgesehen und dafür ausgestaltet, zusammen mit weiteren Basisstationen eine Position eines Transponders anhand von Funksignal-Laufzeiten zu ermitteln und als Master-Basisstation oder als Slave-Basisstation betrieben zu werden. Außerdem ist die Basisstation dafür ausgestaltet, als Master-Basisstation ein Zeitsynchronisationssignal an zumindest zwei Slave-Basisstationen zu senden und eine erste kryptgraphisch gesicherte Information an einen Transponder zu senden und eine zweite kryptographisch gesicherte Information vom Transponder zu empfangen.

Darüber hinaus ist die erfindungsgemäße Basisstation dafür ausgestaltet, bei korrektem Empfang der zweiten kryptographisch gesicherten Information eine Signallaufzeit zu ermitteln, die eine Differenz zwischen einem Sendezeitpunkt der ersten kryptographisch gesicherten Information und einem jeweiligen Empfangszeitpunkt der zweiten kryptographisch gesicherten Information abzüglich einer vorgegebenen Zeitdauer umfasst. Zusätzlich ist die Basisstation dafür ausgestaltet, als Master-Basisstation die Position des Transponders anhand der ermittelten Signallaufzeiten als Schnittpunkt eines Kreises um die Master-Basisstation mit Ellipsen um die Slave-Basisstationen zu berechnen.

Die vorliegende Erfindung wird nachfolgend an einem Ausführungsbeispiel anhand der Zeichnung näher erläutert. Es zeigt
- Figur 1: Funkortungssystem mit mehreren Basisstationen für ein industrielles Automatisierungssystem,
- Figur 2: eine schematische Darstellung einer Slave-Basis-station des Funkortungssystems gemäß Figur 1,
- Figur 3: eine graphische Darstellung einer Berechnung einer Position eines Transponders anhand durch die Basis-stationen der ermittelten.

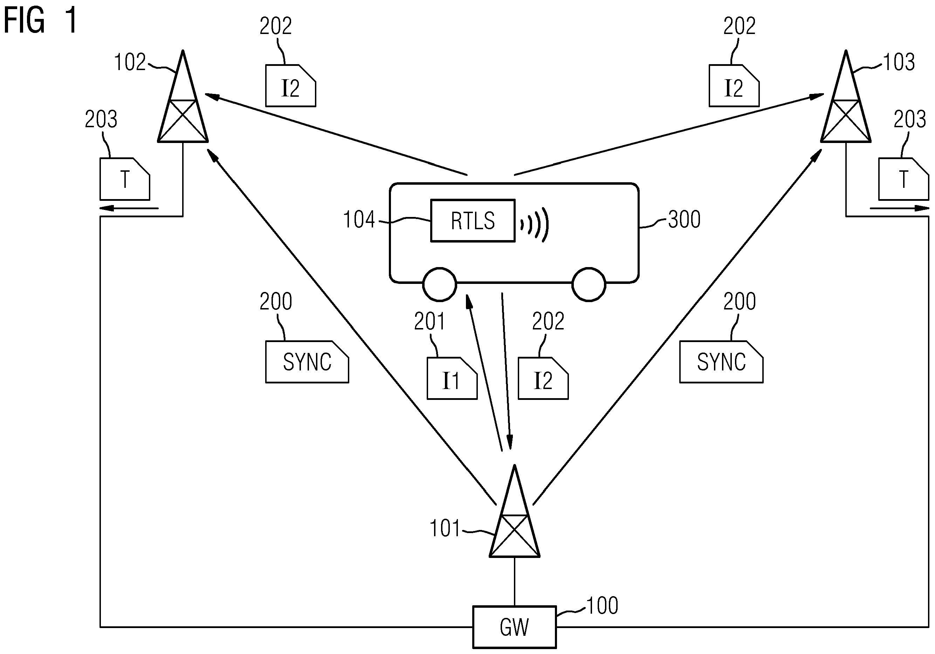

Das in Figur 1 dargestellte Funkortungssystem ist im vorliegenden Ausführungsbeispiel ein UWB-basiertes Real-time Locating System (RTLS), das mehrere Basisstationen 101-103 umfasst, die jeweils an vorgegebenen bzw. bekannten Positionen angeordnet sind. Mittels der Basisstationen 101-103 wird anhand von Funksignallaufzeiten eine Position eines Transponders 104 erfasst, der an einem zu ortenden Gegenstand angebracht. Von den Basisstationen 101-103 wird eine Basisstation 101 als Master-Basisstation betrieben, während die übrigen Basisstationen 102-103 als Slave-Basisstationen betrieben werden. Die Basisstationen 101-103 sind untereinander zeitsynchronisiert. Hierzu sendet die Master-Basisstation 101 ein Zeitsynchronisationssignal 200 an die beiden Slave-Basisstationen 102-103. Dies kann drahtgebunden oder drahtungebunden erfolgen.

Das Funkortungssystem dient im vorliegenden Ausführungsbeispiel zur Überwachung der Position eines autonomen Fahrzeugs 300, mit dem Produktionsgüter zu einer Fahrzeugfertigungslinie transportiert werden. An dem autonomen Fahrzeug 300 ist zur Ortung der Transponder 104 angeordnet. Neben UWB- bzw. 2,4 GHz ISM-Band-Komponenten kann das Funkortungssystem grundsätzlich zusätzliche Komponenten zur GPS-, WLAN- oder Inertialsensorik-basierten Ortung umfassen. Dabei können mehrere oder alle dieser Komponenten in den Transponder 104 und die Basisstationen 101-103 des Funkortungssystems integriert sein.

Die Basisstationen 101-103 sind im vorliegenden Ausführungsbeispiel mit einem Gateway 100 des Funkortungssystems verbunden. Der Transponder 104 übermittelt vorzugsweise einen dem zu ortenden Gegenstand zugeordneten Objektidentifikator an die Basisstationen 101-103. Auf dieser Basis senden die Slave-Basisstationen 102-103 Datagramme 203, die insbesondere erfasste Signallaufzeitinformationen umfassen, zur Auswertung an die Master-Basisstation 101.

Zur kryptographisch gesicherten Lokalisierung des Transponders 104 sendet die Master-Basisstation 101 eine erste kryptgraphisch gesicherte Information 201 an den Transponder 104. Bei korrektem Empfang der ersten kryptographisch gesicherten Information 201 antwortet der Transponder 104 innerhalb einer vorgegebenen Zeitdauer ab Empfang mit einer zweiten kryptographisch gesicherten Information 202 an die Basisstationen 101-103. Im vorliegenden Ausführungsbeispiel werden die erste 201 und die zweite kryptgraphisch gesicherte Information 202 während eines Initialisierungsvorgangs in den Basisstationen 101-103 gegen unautorisierten Zugriff gesichert gespeichert.

Die Basisstationen 101-103 ermitteln bei korrektem Empfang der zweiten kryptographisch gesicherten Information jeweils eine Signallaufzeit, die eine Differenz zwischen einem Sendezeitpunkt der ersten kryptographisch gesicherten Information 201 und einem jeweiligen Empfangszeitpunkt der zweiten kryptographisch gesicherten Information 202 abzüglich der vorgegebenen Zeitdauer umfasst. Ein korrekter Empfang der ersten 201 und der zweiten kryptgraphisch gesicherten Information 202 umfasst jeweils ein erfolgreiches Entschlüsseln und ein erfolgreiches Vergleichen mit einer vorliegenden Referenz-Information. Um mögliche Manipulationen der Lokalisierung zu verhindern, wird die zweite kryptographisch gesicherte Information 202 vorteilhafterweise nur einmal identisch an die Basisstationen 101-103 gesendet. Für nachfolgende Lokalisierungsvorgänge wird die zweite kryptographisch gesicherte Information 202 vorzugsweise entsprechend einer nur den Basisstationen 101-103 bekannten Codesequenz fortlaufend modifiziert.

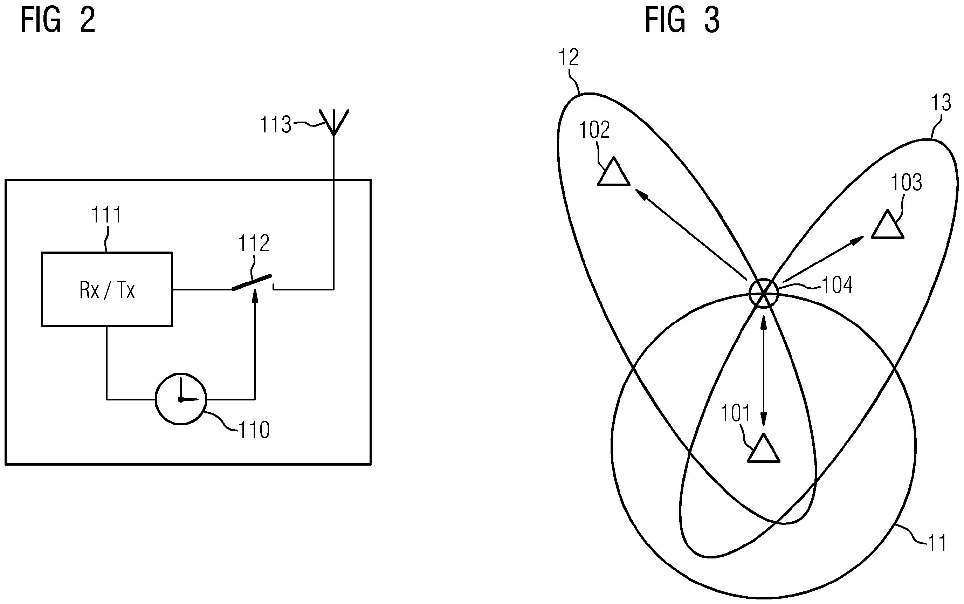

Entsprechend Figur 2 umfassen die Basisstationen 101-103 jeweils einen lokalen Oszillator 110 als Referenzzeitgeber. Dies gilt auch für den Transponder 104. Zwischen der Master-Basisstation 101 und dem Transponder 104 wird eine Korrektur einer Frequenzabweichung ihrer lokalen Oszillatoren entsprechend einem Distance Bounding Protokoll durchgeführt. Die Slave-Basisstationen 102-103 führen anhand der Korrektur der Frequenzabweichung des lokalen Oszillators der Master-Basisstation jeweils eine entsprechende Korrektur für ihren jeweiligen lokalen Oszillator durch.

Die Basisstationen 102-103 umfassen neben einer Sende- und Empfangseinheit 111 jeweils zumindest eine über einen steuerbaren Schalter 112 zu- bzw. abschaltbare Antenne 113. Um Interferenzen am Transponder 104 zu vermeiden schalten die Slave-Basisstationen 102-103, während die Master-Basisstation 101 die erste kryptgraphisch gesicherte Information 201 an den Transponder 104 sendet, zeitgleich ihre Antennen 113 ab und schalten diese vorteilhafterweise erst nach vollständigen Senden der ersten kryptgraphisch gesicherten Information 201 durch die Master-Basisstation 101 wieder zu. Hierzu weisen die Basisstationen 102-103 jeweils eine Kopplung zwischen ihrem lokalen Oszillator 110 und dem steuerbaren Schalter 112 auf.

Die Sende- und Empfangseinheiten 111 der Slave-Basisstationen 102-103 senden im vorliegenden Ausführungsbeispiel jeweils eine erste kryptgraphisch gesicherte Information 201 an den Transponder 104, die mit der durch die Master-Basisstation 101 gesendeten ersten kryptgraphisch gesicherten Information 101 identisch ist. Allerdings unterbinden die Slave-Basisstationen 102-103 jeweils während eines Sendens der ersten kryptgraphisch gesicherten Information 201 durch die Master-Basisstation 101 ein zeitgleiches Senden ihrer ersten kryptographisch gesicherten Information und schalten erst nach dem vollständigen Senden der ersten kryptgraphisch gesicherten Information 201 durch die Master-Basisstation 101 wieder auf Empfang.

Wie bei Distance Bounding Verfahren üblich, definiert ein Distance Bounding zwischen der Master-Basisstation 101 und dem Transponder 104 bei zweidimensionaler Betrachtung entsprechend Figur 3 einen Kreis 11 um die Master-Basisstation 101. Dadurch, dass die Slave-Basisstationen 102-103 eine Antwort des Transponders 104 auf die durch die Master-Basisstation 101 gesendete erste kryptgraphisch gesicherte Information 201 empfangen und nicht eine Antwort auf eine eigene gesendete erste kryptgraphisch gesicherte Information 201, wird durch die durch Slave-Basisstationen 102-103 ermittelten Signallaufzeiten jeweils eine Ellipse 12-13, in deren Brennpunkten die jeweilige Slave-Basisstation 102-103 und die Master-Basisstation 101 liegen. Dementsprechend berechnet die Master-Basisstation 101 die Position des Transponders 104 anhand der ermittelten Signallaufzeiten als Schnittpunkt des Kreises 11 um die Master-Basisstation 101 mit Ellipsen 12-13 um die Slave-Basisstationen 102-103.

Für den Schnittpunkt des Kreises 11 um die Master-Basisstation 101 mit den Ellipsen 12-13 um die Slave-Basisstationen 102-103 kann ein Toleranzbereich vorgegeben werden, innerhalb dessen sich die Kurve 11 und die Ellipsen 12-13 zumindest annähern müssen. Bei einer Überschreitung des Toleranzbereichs wird beispielsweise ein Fehler oder Manipulationsversuch signalisiert.

## Patentansprüche

1. Verfahren zur Lokalisierung eines Transponders für ein Funkortungssystem, bei dem
- eine Position eines Transponders (104) mittels mehrerer Basisstationen (101-103) des Funkortungssystems anhand von Funksignal-Laufzeiten ermittelt wird, wobei die Basisstationen jeweils an einer vorgegebenen Position angeordnet sind,
- eine Master-Basisstation (101) ein Zeitsynchronisationssignal (200) an zumindest zwei Slave-Basisstationen (102-103) sendet,
- die Master-Basisstation eine erste kryptgraphisch gesicherte Information (201) an den Transponder sendet,
- der Transponder bei korrektem Empfang der ersten kryptographisch gesicherten Information innerhalb einer vorgegebenen Zeitdauer ab Empfang mit einer zweiten kryptographisch gesicherten Information (202) an die Basisstationen antwortet,
- die Basisstationen bei korrektem Empfang der zweiten kryptographisch gesicherten Information jeweils eine Signallaufzeit ermitteln, die eine Differenz zwischen einem Sendezeitpunkt der ersten kryptographisch gesicherten Information und einem jeweiligen Empfangszeitpunkt der zweiten kryptographisch gesicherten Information abzüglich der vorgegebenen Zeitdauer umfasst,
- die Master-Basisstation die Position des Transponders anhand der ermittelten Signallaufzeiten als Schnittpunkt eines Kreises (11) um die Master-Basisstation mit Ellipsen (12-13) um die Slave-Basisstationen berechnet.

2. Verfahren nach Anspruch 1,
bei dem die Basisstationen jeweils zumindest eine Antenne umfassen und bei dem die Slave-Basisstationen, während die Master-Basisstation die erste kryptgraphisch gesicherte Information an den Transponder sendet, zeitgleich ihre Antennen abschalten und erst nach vollständigen Senden der ersten kryptgraphisch gesicherten Information wieder zuschalten.

3. Verfahren nach einem der Ansprüche 1 oder 2,
bei dem die Slave-Basisstationen jeweils eine erste kryptgraphisch gesicherte Information an den Transponder senden, die mit der durch die Master-Basisstation gesendeten ersten kryptgraphisch gesicherten Information identisch ist, und bei dem die Slave-Basisstationen jeweils während eines Sendens der ersten kryptgraphisch gesicherten Information durch die Master-Basisstation ein zeitgleiches Senden ihrer ersten kryptographisch gesicherten Information unterbinden und erst nach dem vollständigen Senden der ersten kryptgraphisch gesicherten Information wieder auf Empfang schalten.

4. Verfahren nach einem der Ansprüche 1 bis 3,
bei dem die erste und die zweite kryptgraphisch gesicherte Information während eines Initialisierungsvorgangs in den Basisstationen gegen unautorisierten Zugriff gesichert gespeichert werden.

5. Verfahren nach einem der Ansprüche 1 bis 4,
bei dem ein korrekter Empfang der ersten und/oder der zweiten kryptgraphisch gesicherten Information ein erfolgreiches Entschlüsseln und/oder Vergleichen mit einer Referenz-Information umfasst.

6. Verfahren nach einem der Ansprüche 1 bis 5,
bei dem die zweite kryptographisch gesicherte Information nur einmal identisch an die Basisstationen gesendet wird und für nachfolgende Lokalisierungsvorgänge entsprechend einer nur den Basisstationen bekannten Codesequenz fortlaufend modifiziert wird.

7. Verfahren nach einem der Ansprüche 1 bis 6,
bei dem für den Schnittpunkt des Kreises um die Master-Basisstation mit den Ellipsen um die Slave-Basisstationen ein Toleranzbereich vorgegeben wird, innerhalb dessen sich die Kurve und die Ellipsen zumindest annähern müssen, und bei dem bei einer Überschreitung des Toleranzbereichs ein Fehler oder Manipulationsversuch signalisiert wird.

8. Verfahren nach einem der Ansprüche 1 bis 7,
bei dem die Basisstationen und der Transponder jeweils einen lokalen Oszillator umfassen, bei dem zwischen der Master-Basisstation und dem Transponder eine Korrektur einer Frequenzabweichung ihrer lokalen Oszillatoren (110) entsprechend einem Distance Bounding Protokoll durchgeführt wird und bei dem die Slave-Basisstationen anhand der Korrektur der Frequenzabweichung des lokalen Oszillators der Master-Basisstation jeweils eine entsprechende Korrektur für ihren jeweiligen lokalen Oszillator durchführen.

9. Verfahren nach einem der Ansprüche 1 bis 8,
bei dem das Funkortungssystem zumindest ein UWB-basiertes Real-time Locating System ist.

10. Funkortungssystem zur Durchführung eines Verfahrens nach einem der Ansprüche 1 bis 9, wobei das Funkortungssystem
- mehrere jeweils an einer vorgegebenen Position angeordnete Basisstationen (101-103) zur Ermittlung einer Position zumindest eines Transponders (104) und zumindest einen Transponder umfasst,
- wobei die Basisstationen dafür ausgestaltet sind, eine Position des Transponders anhand von Funksignal-Laufzeiten zu ermitteln und als Master-Basisstation oder als Slave-Basisstation betrieben zu werden,
- wobei die Basisstationen zusätzlich dafür ausgestaltet sind, als Master-Basisstation ein Zeitsynchronisationssignal (209) an zumindest zwei Slave-Basisstationen zu senden und eine erste kryptgraphisch gesicherte Information (201) an den Transponder zu senden,
- wobei der Transponder dafür ausgestaltet ist, bei korrektem Empfang der ersten kryptographisch gesicherten Information innerhalb einer vorgegebenen Zeitdauer ab Empfang mit einer zweiten kryptographisch gesicherten Information (202) an die Basisstationen zu antworten,
- wobei die Basisstationen ferner dafür ausgestaltet sind, bei korrektem Empfang der zweiten kryptographisch gesicherten Information jeweils eine Signallaufzeit zu ermitteln, die eine Differenz zwischen einem Sendezeitpunkt der ersten kryptographisch gesicherten Information und einem jeweiligen Empfangszeitpunkt der zweiten kryptographisch gesicherten Information abzüglich der vorgegebenen Zeitdauer umfasst,
- wobei die Basisstationen zusätzlich dafür ausgestaltet sind, als Master-Basisstation die Position des Transponders anhand der ermittelten Signallaufzeiten als Schnittpunkt eines Kreises (11) um die Master-Basisstation (101) mit Ellipsen (12-13) um die Slave-Basisstationen (102-103) zu berechnen.

11. Basisstation für ein Funkortungssystem nach Anspruch 10, wobei die Basisstation dafür ausgestaltet ist,
- zusammen mit weiteren Basisstationen eine Position eines Transponders anhand von Funksignal-Laufzeiten zu ermitteln und als Master-Basisstation oder als Slave-Basisstation betrieben zu werden,
- als Master-Basisstation ein Zeitsynchronisationssignal an zumindest zwei Slave-Basisstationen zu senden und eine erste kryptgraphisch gesicherte Information an einen Transponder zu senden,
- eine zweite kryptographisch gesicherte Information vom Transponder zu empfangen,
- bei korrektem Empfang der zweiten kryptographisch gesicherten Information eine Signallaufzeit zu ermitteln, die eine Differenz zwischen einem Sendezeitpunkt der ersten kryptographisch gesicherten Information und einem jeweiligen Empfangszeitpunkt der zweiten kryptographisch gesicherten Information abzüglich einer vorgegebenen Zeitdauer umfasst,
- als Master-Basisstation die Position des Transponders anhand der ermittelten Signallaufzeiten als Schnittpunkt eines Kreises um die Master-Basisstation mit Ellipsen um die Slave-Basisstationen zu berechnen.
